# EUROPEAN PATENT APPLICATION

(11) **EP 1 810 940 A1**
(43) Date of publication of application: **25.07.2007**
(21) Application number: 07000941.0
(22) Date of filing: 17.01.2007
(51) Int. Cl.: B65G 47/76, B65G 47/244

(54) **Aligner apparatus**

(30) Priority: 20.01.2006 IT MO20060020
(71) Applicant: Santi, Gabriele, 41045 Montefiorino (MO) (IT)
(72) Inventor: Santi, Gabriele, 41045 Montefiorino (MO) (IT)
(74) Representative: Feltrinelli, Secondo Andrea

(57) **Abstract**

The aligner apparatus (1) comprises: conveyance means (7) having a mobile conveyor surface (7A) in a conveyor direction (A) to convey products (2, 3) on said conveyor surface (7A), placed above and flush with this and provided with an alignment surface (8A) having an alignment direction (B; B1; B2) different from said conveyor direction (A) to obtain aligned products (2, 3), said alignment surface (8A) being able to move according to said alignment direction (B; B1; B2) so as to push said aligned products (2, 3) along this.

## Description

### FIELD OF THE INVENTION.

This invention relates to an aligner apparatus, suitable for aligning ceramic products on conveyor lines according to pre-established directions and arranging these in a upright or overturned position.

### TECHNOLOGICAL BACKGROUND

As regards the industrial manufacture of ceramic products, such as tiles, which have both conventional and reduced dimensions, to be used to make mosaics, the need is felt to have at disposal an automatic apparatus that aligns these according to a pre-established alignment direction.

This alignment is required, for example, after the products have exited from the kilns in which they are fired to stabilise their configuration and the decorations applied to them.

This alignment is particularly necessary in the production of strips: in fact, in this case, the strips, which have an elongated shape, to be sent, for example, to an automatic packaging station, have to be placed one after the other and all positioned in the same direction, so that, when they reach the packaging station, they can be identified by means of detection devices, picked up and handled using the handling devices of automatic machines which have memorised the direction in which the products must arrive and which must coincide with a grip direction predefined in the memory of the automatic machines.

To obtain this alignment, conveyor belts are currently used on which the ceramic products, meaning the tiles and/or strips, are placed at random, at the exit of the firing kilns.

Along the conveyor belt, a straight barrier is placed which, after being positioned in the desired direction, is fastened to a support, so as to be supported flush with the belt, so this can continue moving underneath this barrier, while the arriving tiles or strips are stopped against it.

When the tiles and the strips come to rest against the barrier, the thrust generated by the friction contact of their lower surfaces with the surface of the conveyor belt which moves continuously, causes them to gradually rotate, until one of the sides rests against the barrier and is parallel with this; the constant thrust of the conveyor belt then forces them to gradually slip along the surface of the barrier, moving towards a point of a side edge of the conveyor belt where a further conveyor is fitted that picks them up as they fall over the side edge of the previous conveyor, and on which they are deposited aligned with one another and with the direction of the barrier; this further conveyor then takes them to the packaging station, all aligned with one another and with the direction of positioning stored in the automatic handling machines for packaging.

### SCOPE OF THE INVENTION.

This state of the art has a number of drawbacks.

A first drawback is that the tiles and the strips of smaller size and weight, after rotation and resting of a side against the barrier, tend to adhere to this, or in any case to move very slowly along it, even though undergoing the constant thrust action exercised by the conveyor belt on which they are rested; this circumstance prevents the gradual and correct sliding of the tiles towards the side edge of the conveyor belt and the transfer onto another belt, with the result that the tiles and strips that remain for a long time on the conveyor belt and those coming from behind pile up because they do not move at a suitable speed towards the edge of the belt.

These pile-ups, after a short time, cause accumulation and the total blockage of the conveyor belt and the feed line to the packaging stations.

A second drawback is that very fragile and delicate ceramic products that knock against the barrier, or barriers, which are fixed in their transversal position, can become chipped along the side edges or corners that knock against the barrier surfaces making them unsuitable for sale and therefore causing them to be rejected.

A third drawback is that the speed of positioning and sorting of the ceramic products is substantially low, due to the friction which develops between these and the barrier surfaces and between their resting sides and the conveyor belt.

A fourth drawback is that a number of tiles and/or strips, due to the previously-described pile-ups, can overturn and position themselves, for example, with the visible sides turned in the opposite way to the packaging positions.

One object of the invention is to upgrade the state of the art.

Another object of the invention is to make an aligner apparatus, particularly suitable for aligning ceramic products on sorting lines, that permits avoiding tile pile-ups.

A further object of the invention is to make an aligner apparatus, particularly suitable for positioning ceramic products on sorting lines, that permits avoiding damages to the products.

Another object of the invention is to make an aligner apparatus that permits uprighting any overturned ceramic products.

Another object of the invention is to make an apparatus that permits speeding up the alignment of ceramic products along positioning or sorting lines.

According to one aspect of the invention, an aligner apparatus is envisaged comprising: conveyance means having a mobile conveyor surface in a conveyor direction to convey products; aligning means of said products on said conveyor surface, placed above and flush with this and provided with an alignment surface having an alignment direction different from said conveyor direction to obtain aligned products, characterized in that said alignment surface is movable along said alignment direction, so as to push aligned products along this.

According to another aspect of the invention, an aligner apparatus is envisaged comprising: conveyance means of products having a mobile conveyor surface along a conveyor path; aligning means of said products on said conveyor surface, placed above and flush with this and provided with an alignment surface which has an alignment direction different from said conveyor path to obtain aligned products, characterized in that said alignment surface is movable along said alignment direction, so as to push said aligned products along this.

The aligner apparatus therefore permits aligning ceramic products, and products in general, according to previously selected directions, automatically and without being damaged and arranging these according to pre-established positions, correcting the positions of any overturned products with respect to desired positions.

### BRIEF DESCRIPTION OF THE DRAWINGS.

Further characteristics and advantages of the invention will appear even more evident from the description of an apparatus, particularly suitable for aligning ceramic tiles on sorting lines, illustrated indicatively by way of non limiting example, in the attached drawings wherein:
Figure 1 is a view from above of a conveyor belt on which three apparatus are fitted suitable for aligning ceramic products such as, for example, tiles and strips;
Figure 2 is a view from above of the conveyor belt of Figure 1 on which are fitted three apparatus suitable for aligning ceramic products such as tiles and strips, having misaligned infeed fronts;
Figures 3, 4, 5, are views from above of a conveyor turntable on which is fitted an apparatus suitable for aligning ceramic products such as tiles and strips and which features three different sorting options;
Figure 6 shows the turntable of Figures 3, 4, 5, fitted with an apparatus suitable for aligning ceramic products such as tiles and strips, in a second possible form of embodiment;
Figure 7 is cross-section view of a conveyor taken according to a plane VI-VI of Figure 6, in a first conveyor phase of an overturned tile;
Figure 8 is the section of Figure 7 in a second conveyor phase of an uprighted tile.

### EMBODIMENTS OF THE INVENTION.

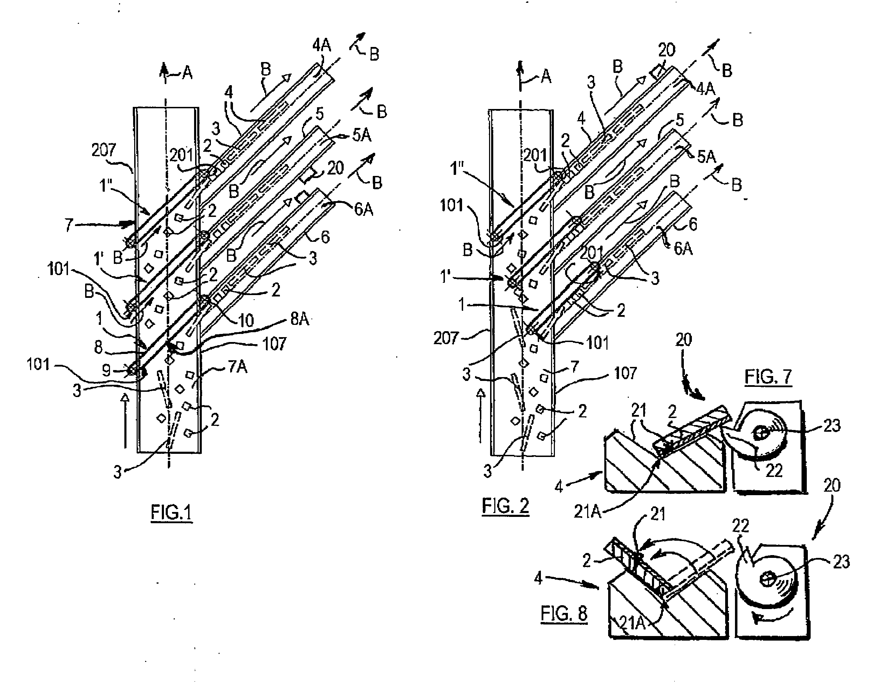

With reference to Figures 1 and 2, by 1 is globally designated an aligner apparatus, particularly suitable for aligning ceramic products, such as tiles 2 and strips 3, on conveyor lines 4, 5, 6, according to a first version of embodiment.

The tiles 2 and the strips 3 are fed by a belt conveyor 7 featuring a conveyor surface 7A and a conveyor direction indicated by the arrow "A" while the apparatus 1 has an alignment direction indicated by the arrow "B"; the conveyor and sorting lines 4, 5, 6 also have respective conveyor and sorting directions that normally, but not necessarily, coincide with the alignment direction "B".

The aligner apparatus 1 comprises a belt 8 that is closed like a ring on a drive pulley 9 and a transmission pulley 10 and which defines an alignment surface 8A that coincides with a branch of the belt 8 turned in the direction from which the tiles 2 and strips 3 come.

Both the drive pulley 9 and the transmission pulley 10 are mounted on devices designed to lift them or lower them together with respect to the conveyor surface 7A, so they are positioned above and flush with this, thus enabling the conveyor belt 7 to slide freely underneath the belt 8, while preventing transit of the tiles 2 or the strips 3 under the belt 8, or to allow the selective transit of a number of tiles 2 and a number of strips 3 with respect to all the others fed by means of the conveyor belt 7.

Each aligner apparatus 1 has an infeed front 101 for the tiles 2 or the strips 3 to be aligned and an outfeed front 201 that protrudes beyond a side edge of the conveyor surface 7A, extending right above the conveyor and sorting lines 4, 5, 6, so as to accompany the aligned tiles 2 and the strips 3 along these, pushing by means of tangential adherence with the alignment surface 8A.

With reference to the Figure 2, it can be observed that each aligner apparatus, marked 1, 1' and 1" respectively, has its own infeed front 101 which is misaligned with respect to that of the adjacent aligner apparatus.

In particular, an infeed front 101 of the aligner apparatus 1 which first intercepts the tiles 2 and the strips 3 on the conveyor surface 7A is more retracted towards a side edge 107 of this, with respect to the other adjacent ones, which are gradually more advanced towards an opposite edge 207 of the conveyor surface 7A.

Consequently, the first aligner apparatus 1 only intercepts the tiles 2 and the strips 3 that are located to the right of the observer of the conveyor surface 7A, the second subsequent aligner apparatus 1' intercepts the tiles 2 and the strips 3 in the central area, while the third aligner apparatus 1 " intercepts the tiles 2 and the strips 3 located to the left of the observer of the conveyor surface 7A.

This way, the tiles 2 and the strips 3 are all aligned according to an alignment direction and conveyed, after sorting, to their corresponding conveyor and sorting lines 4, 5, 6.

The same selection can be made in the version of the apparatus 1 shown in Figure 1, lifting or lowering the first aligner apparatus 1 and the second aligner apparatus 1' in programmed sequences, so that when one of the aligner apparatus is lifted, all the tiles 2 and the strips 3 can pass underneath the belt 8 of this and be intercepted by the next aligner apparatus 1' or 1".

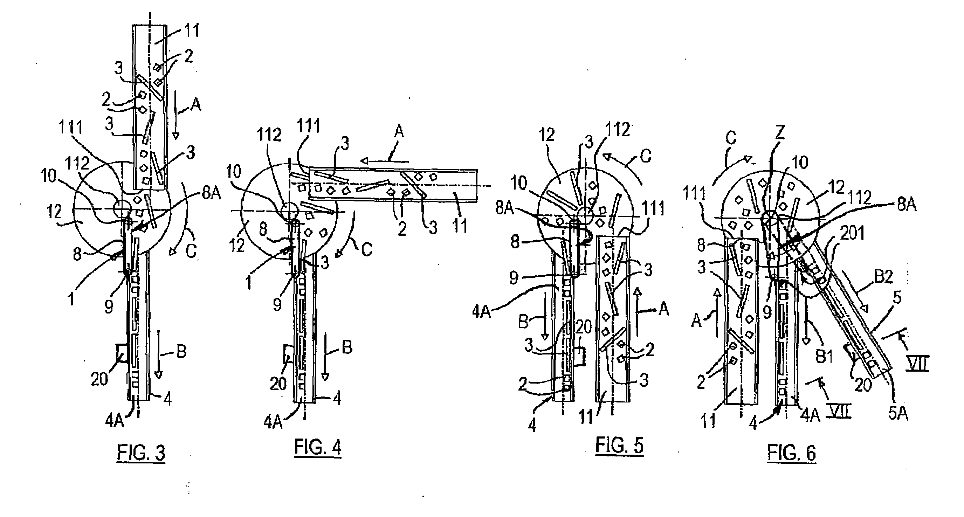

With reference to the figures 3, 4, 5 showing a second version of embodiment of an aligner apparatus 1, it will be observed that the tiles 2 and the strips 3 are fed by a conveyor belt 11 which has an outfeed front 111 surmounting a turntable 12 (functionally coinciding with the conveyor belt 7 of the first version) which can turn according to a conveyor path, in this specific case rotating, indicated by the arrow "C" and having a conveyor surface 12A.

The conveyor belt 11 deposits the tiles 2 and the strips 3, arranged at random, on the conveyor surface 12A of the turntable 12 and on the conveyor surface 12A of the turntable 12 an aligner apparatus 1 is placed with an alignment direction "B" that can be changed as required, for example, as is visible in Figure 3, in agreement with the conveyor and sorting direction of a conveyor and sorting line 4 coinciding with the alignment direction "B"; the height of the aligner apparatus 1 is such as to ensure the turntable 12 is free to rotate underneath and flush with the belt 8, but also such as to intercept the tiles 2 and the strips 3 deposited on this.

With reference to Figures 4 and 5, two further configurations are shown, from among the many possible ones, between the conveyor direction "A" and that of alignment "B"; in Figure 4 in particular, the conveyor direction "A" is perpendicular to the alignment direction "B" while, in Figure 5, the two directions are parallel, but turned in opposite directions.

With reference to Figure 6, it will be observed that the aligner apparatus 1 can also rotate swinging around a rotation axis "Z" perpendicular to the turntable 12, so as to align the tiles 2 and the strips 3 in at least two alignment directions, indicated by B1 and B2 respectively, to align the tiles 2 and the strips 3 alternately according to the direction B 1 or B2, or for selecting, and then so as to sort the selected tiles 2 and the strips 3 on a conveyor and sorting line 4 or another conveyor and sorting line 5.

In this case, one of the pulleys on which the belt 8 is closed like a ring, in this specific case the transmission pulley 10, is fitted coaxially to the rotation shaft 112 of the turntable 12 while the drive pulley 9 is fitted on a device swinging horizontally and of known type, and for this reason not shown in the Figures, that permits positioning the outfeed front 201 of the aligner apparatus 1 aligned with the conveyor and sorting line 4 or 5 and vice versa.

It is also important to consider that, in the forms of embodiment of the aligner apparatus 1 shown in the Figures from 3 to 6, the number of conveyor belts feeding the ceramic products and the directions from which these come, may be several, as long as they all converge with the respective outfeed fronts 11 above the turntable 12.

In the same way, in the particular form of embodiment of the aligner apparatus 1 shown in Figure 6, the positioning directions of the tiles 2 and of the ceramic strips 3 and the number of conveyor and sorting lines can be even higher, all arranged according to conveyor and sorting directions "B" that are substantially radial with respect to the turntable 12.

If the circumstances so require, along the conveyor and sorting lines 4, 5, 6, tip-up devices 20 can be fitted, shown in detail and in a very schematic way in Figures 7 and 8, which are designed to upright any overturned tiles 2 or strips 3.

In this case, the support surfaces of the conveyors making up the conveyor and sorting lines 4, 5, 6 feature a concave cross section, which is made up of two upper longitudinal surfaces 21, joined together in a common longitudinal and central joining edge 21A, and arranged in a "V" configuration, so that the tiles 2 or the strips 3 can be conveyed and sorted in a tilted position, with one side resting along the joining edge 21A and the other protruding slightly beyond the opposite and parallel sides of the longitudinal surfaces 21.

The tip-up devices 20 comprise a rotating tooth 22 which rotates with stepping motion around a rotation shaft 23 with a motor, not shown in the drawings, when an overturned tile 2 or strip 3 transit by it.

The tooth 22 is maintained in inactive configuration, as shown in Figure 7, and is operated when an overturned tile 2 or strip 3 transit by it: the triggered tooth 22 hits, from bottom to top, the side of the overturned tile 2 or strip 3 that protrudes from the upper surface 21 on which it rests, forcing it to rotate around the joining edge 21A with the result that this rests in upright position on the upper surface 21 opposite to that on which it rested when overturned.

## Claims

1. Aligner apparatus (1) comprising: conveyance means (7) having a mobile conveyor surface (7A) in a conveyor direction (A) to convey products (2, 3); aligning means (8) of said products (2, 3) on said conveyor surface (7A), placed above and flush with this and provided with an alignment surface (8A) having an alignment direction (B; B1; B2) different from said conveyor direction (A) to obtain aligned products (2, 3), **characterized in that** said alignment surface (8A) is movable along said alignment direction (B; B1; B2) so as to push said aligned products (2, 3) along this.

2. Aligner apparatus (1) comprising: conveyance means (12) of products (2, 3), having a mobile conveyor surface (12A) along a conveyor path C, aligning means (8) of said products (2, 3) on said conveyor surface (12A), placed above and flush with this and provided with an alignment surface (8A) which has an alignment direction (b; B1; B2) different from said conveyor path C to obtain aligned products (2, 3), **characterized in that** said alignment surface (8A) is movable along said alignment direction (B; B1; B2) so as to push said aligned products (2, 3) along this.

3. Apparatus according to claim 1 wherein said conveyor direction (A) is straight.

4. Apparatus according to claim 1 wherein said mobile conveyor surface (7A) comprises a belt conveyor (7).

5. Apparatus according to claim 2 wherein said conveyor path C is round.

6. Apparatus according to claim 2 wherein said mobile conveyor surface comprises a circular turntable (12) operated rotating with driving means and having a conveyor surface (12A).

7. Apparatus according to claim 1 or 2 wherein said alignment direction (B; B1; B2) is straight.

8. Apparatus according to any of the claims 1, 2 wherein said alignment means comprise: belt means (8) wrapped like a ring on driving (9) and transmission (10) means and placed on top of said mobile conveyor surface (7A; 12A) at a pre-established height.

9. Apparatus according to claim 8 wherein said pre-established height is such as to result lower than a lifting height of said products (2, 3) with respect to said mobile conveyor surface (7A; 12A).

10. Apparatus according to any of the claims from 1 to 9 wherein said aligning means (8) are fitted on adjusting means of said pre-established height.

11. Apparatus according to claim 8 wherein said belt means (8) has a pre-established length.

12. Apparatus according to claim 11 wherein said belt means (8) can be positioned coupled with further belt means (8) on said mobile conveyor surface (7A; 12A).

13. Apparatus according to claim 12 wherein said belt means (8) and further belt means (8) feature respective infeed fronts (101) positioned on top of said mobile conveyor surface (7A; 12A) and opposite outfeed fronts (201) positioned beyond the latter.

14. Apparatus according to claim 13 wherein said infeed fronts (101) are positioned onto said mobile conveyor surface (7A; 12A) in stepped positions between them so as to cross, transversally to said conveyor direction (A; C), growing portions of said mobile conveyor surface (7A; 12A).

15. Apparatus according to claim 1 or 2 wherein said alignment surface (8A) can be moved alternately between at least two alignment directions (B1; B2).

16. Apparatus according to claim 1 wherein said conveyor direction (A) forms together with said alignment direction (B; B 1; B2) an obtuse angle.

17. Apparatus according to any of the preceding claims wherein said outfeed fronts (201) extend above the conveyor and sorting means (4, 5, 6) according to conveyor and sorting directions parallel to said alignment direction (B; B1; B2; B3).

18. Apparatus according to claim 17 wherein said conveyor and sorting means comprise respective belt conveyors (4, 5, 6).

19. Apparatus according to claim 18 wherein said belt conveyors (4, 5, 6) feature respective "V"-shaped conveyor surfaces (4A, 5A, 6A) and defining two resting surfaces (21) joined together along a common joining edge (21A).

20. Apparatus according to any of the claim from 17 to 19 wherein along said conveyor surfaces (4A, 5A, 6A) tip-up means (20) are provided to turn over any overturned products (2, 3).

21. Apparatus according to claim 20 wherein said tip-up means (21) comprise rotating tooth means (22), which can operate in rotation with stepping motion with motor means and designed to lift the edges of said products (2, 3) and turn them over from a resting surface (21) to an opposite resting surface (21).
